(19) Europäisches Patentamt / European Patent Office / Office européen des brevets

(11) **EP 2 816 093 B1**

(12) **FASCICULE DE BREVET EUROPEEN**

(45) Date de publication et mention
de la délivrance du brevet:
**04.04.2018 Bulletin 2018/14**

(21) Numéro de dépôt: **14305832.9**

(22) Date de dépôt: **02.06.2014**

(51) Int Cl.:
*C10G 45/08* *(2006.01)*        *C10G 65/04* *(2006.01)*
*B01J 23/652* *(2006.01)*      *B01J 23/74* *(2006.01)*
*B01J 23/75* *(2006.01)*       *B01J 23/755* *(2006.01)*
*B01J 23/882* *(2006.01)*      *B01J 23/883* *(2006.01)*
*B01J 23/24* *(2006.01)*       *B01J 23/28* *(2006.01)*
*B01J 20/06* *(2006.01)*

(54) **PROCÉDÉ D'ÉLIMINATION DE L'ARSENIC D'UNE CHARGE D'HYDROCARBURES**

VERFAHREN ZUR ELIMINIERUNG VON ARSEN AUS EINER LADUNG VON KOHLENWASSERSTOFFE

METHOD FOR REMOVING ARSENIC FROM A HYDROCARBON FEEDSTOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2013 FR 1355932**

(43) Date de publication de la demande:
**24.12.2014 Bulletin 2014/52**

(73) Titulaire: **IFP Energies nouvelles
92500 Rueil-Malmaison (FR)**

(72) Inventeurs:
• **Marion, Marie-Claire
69390 Vernaison (FR)**
• **Leflaive, Philibert
69780 Mions (FR)**
• **Pucci, Annick
78290 Croissy-sur-Seine (FR)**

(56) Documents cités:
**EP-A2- 2 255 873        FR-A1- 2 673 191
US-A- 4 153 540        US-A1- 2006 231 456**

## Description

La présente invention concerne un procédé pour éliminer, par captation, l'arsenic présent dans une charge d'hydrocarbures.

## Etat de la technique

Les pétroles bruts, selon leurs origines, peuvent contenir de nombreux composés métalliques à l'état de traces, généralement présentes sous forme de complexes organométalliques.

Ces composés organométalliques sont des poisons des catalyseurs utilisés dans les procédés de transformation du pétrole. En particulier, ils empoisonnent les catalyseurs d'hydrotraitement et d'hydrogénation en se déposant progressivement sur la surface active de ces catalyseurs. Des composés métalliques se trouvent notamment dans les coupes lourdes provenant de la distillation du brut pétrolier (nickel, vanadium, arsenic, mercure) ou encore dans les condensats de gaz naturel (mercure, arsenic).

Les traitements par craquage thermiques ou catalytiques des coupes d'hydrocarbures, par exemple leur vapocraquage en coupes d'hydrocarbures plus légers et oléfiniques ou aromatiques, peuvent permettre l'élimination de certains métaux (par exemple le nickel, le vanadium...). En revanche certains autres métaux, en particulier l'arsenic, susceptibles de former des composés volatils se retrouvent au moins en partie dans les coupes plus légères et peuvent, de ce fait, empoisonner les catalyseurs des procédés de transformation de ces coupes, tels que les catalyseurs d'hydrogénation sélective ou d'hydrodésulfuration.

Des procédés antérieurs sont connus pour éliminer l'arsenic dans les hydrocarbures en phase liquide; on opère notamment en présence de masses solides, lesquelles peuvent être dénommées indifféremment: masse d'adsorption, de captation, de piégeage, d'extraction, de transfert de métaux. Par exemple le brevet US 4,046,674 décrit un procédé de désarsénification d'huile de schiste mettant en oeuvre une masse de captation comprenant du nickel et du molybdène sous forme sulfures déposés sur un support par exemple une alumine.

La demande de brevet FR 2617497 préconise pour désarsénier une charge d'hydrocarbures de mettre en oeuvre un procédé dans lequel on fait passer la charge avec de l'hydrogène au contact d'une masse de captation renfermant du nickel, dont au moins 50% en poids est à l'état de métal, à une température de 110 à 280°C sous une pression de 1 à 100 bars (0,1 - 10 MPa).

La demande de brevet FR 2617497 divulgue un procédé pour l'élimination de l'arsenic de charges hydrocarbonées liquides à une température comprise entre 0 et 100°C, à faible pression, en l'absence totale d'hydrogène et en présence d'une masse de captation contenant au moins un sulfure ou un oxyde de cuivre déposé sur un support. Le document FR 2673191 concerne un procédé d'élimination d'arsenic d'une charge d'hydrocarbures comprenant la mise en contact de ladite charge avec deux masses de captation.

Il existe cependant encore un besoin chez les raffineurs pour des procédés de désarsénification qui soient efficaces et qui mettent en jeu des quantités les plus faibles possibles de masses de captation. Un but de l'invention est de proposer un procédé alternatif de désarsénification efficace qui puisse être opéré notamment avec un débit de charge à traiter le plus grand possible.

## Résumé de l'invention

L'invention se rapporte à un procédé selon la revendication 1. De façon surprenante, la demanderesse a constaté que l'enchainement spécifique des masses de captation ou la mise en oeuvre d'un mélange de masses de captation mentionné plus haut permet une élimination de l'arsenic de manière particulièrement efficace et avec des débits volumiques horaires rapportés aux volumes des masses de captation élevés, c'est-à-dire supérieure à 4 $h^{-1}$, de préférence supérieure à 6 $h^{-1}$ voire supérieure à 10 $h^{-1}$. Le procédé selon l'invention permet ainsi de produire des effluents à basse teneur en arsenic en mettant en oeuvre une quantité moindre de catalyseurs pour un même débit de charge à traiter, d'où un intérêt non négligeable du point de vue économique pour la conduite d'une raffinerie.

Selon un mode de réalisation, l'étape a) est réalisée avant l'étape b) et lesdites étapes sont conduites dans une première et une seconde zones réactionnelles respectivement comprises dans un premier et second réacteurs. Dans ce cas de figure, les réacteurs peuvent être opérés en lit fixe, en lit mobile ou en lit bouillonnant.

Alternativement lorsque l'étape a) est réalisée avant l'étape b), lesdites étapes sont conduites respectivement dans une première et une seconde zones réactionnelles comprises dans un même réacteur en lit fixe.

Selon un autre mode de réalisation, l'étape a) est réalisée simultanément avec l'étape b) et lesdites étapes sont conduites dans un réacteur incluant une zone réactionnelle comprenant un mélange des première et seconde masses de captation.

De préférence la teneur en métal M1 est comprise entre 3 et 12% poids, la teneur en métal M2 est comprise entre 1 et 15% poids, et la teneur en métal M3 est comprise entre 5 et 18% poids par rapport au poids total de la première masse de captation.

De manière préférée, la première masse de captation présente un rapport molaire des métaux M2/M3 compris entre 0,05 et 2.

Selon l'invention le métal M1 est le molybdène, le métal M2 est le cobalt et le métal M3 est le nickel. De préférence la seconde masse de captation a une teneur en nickel comprise entre 5 et 50% poids de NiO par rapport au poids total de la seconde masse de captation sous forme oxyde avant sulfuration.

Avantageusement les métaux M1, M2 et M3 de la première masse de captation sont en outre sulfurés.

De préférence, le rapport molaire entre le soufre (S) présent sur la première masse de captation et l'ensemble des métaux M1, M2 et M3, est au moins égal à 60% du rapport molaire théorique correspondant à la sulfuration totale de chaque élément en sulfure, au prorata des fractions molaires relatives de chaque métal.

De préférence, le rapport molaire entre le soufre (S) présent sur la seconde masse de captation et le nickel est au moins égal à 60% du rapport molaire théorique correspondant à la sulfuration totale du nickel.

Le rapport de volume de la première masse de captation par rapport au volume de la deuxième masse de captation est généralement compris entre 0,2 et 5, de préférence compris entre 0,2 et 2.

L'invention concerne également un procédé de traitement d'une charge d'hydrocarbures comprenant un procédé d'élimination de l'arsenic selon l'invention dans lequel l'effluent à teneur réduite en arsenic est traité dans une étape d'hydrotraitement catalytique. Par exemple l'étape d'hydrotraitement est une hydrodésulfuration.

## Description détaillée de l'invention

Dans la présente description, le terme "masse de captation" peut être indifféremment remplacé par des termes équivalent tels que : masse d'adsorption, de piégeage, d'extraction, ou de transfert de métaux.

La charge d'hydrocarbures

La charge d'hydrocarbures susceptible d'être traitée par le procédé selon l'invention est une charge au moins partiellement liquide à température ambiante et pression atmosphérique.

Par exemple la charge hydrocarbonée à traiter est une essence de craquage catalytique issue d'unités de craquage catalytique, de craquage thermique ou de vapocraquage. Le procédé peut également s'appliquer au traitement de mélanges d'essences de distillation directe qui peuvent contenir des métaux lourds issus du brut avec des essences de craquage comprenant des mono-oléfines et des dioléfines. La charge d'hydrocarbures peut contenir jusqu'à 2 ppm poids d'arsenic.

Par exemple, la charge d'hydrocarbure à traiter est une essence de craquage catalytique comprenant entre 5% et 60% poids de mono-oléfines, entre 50 ppm et 6000 ppm de composés soufrés et entre 10 et 1000 ppb d'arsenic.

Dans le contexte de l'invention, l'arsenic présent peut être sous forme d'arsines de formule générale $AsR_3$ où R est un atome d'hydrogène ou un radical hydrocarboné tel que méthyl, éthyl, propyl ou phényl.

Etape a) du procédé selon l'invention

Le procédé selon l'invention met donc en oeuvre une étape a) qui consiste en la mise en contact de la charge d'hydrocarbures et de l'hydrogène avec une première masse de captation.

Cette mise en contact s'effectue à une température opératoire comprise entre 30 et 400 °C, sous une pression opératoire comprise entre 0,2 et 5 MPa, avec un rapport du débit d'hydrogène sur le débit de charge hydrocarbonée compris entre 2 et 800 Nl/l et à un débit volumique horaire rapporté au volume de la première masse de captation compris entre 4 et 50 $h^{-1}$. De manière préférée, la température opératoire est comprise entre 200 et 400°C, le rapport du débit d'hydrogène sur le débit de la charge hydrocarbonée est compris entre 50 et 800 Nl/l et le débit volumique horaire rapporté au volume de la première masse de captation est compris entre 6 et 40 $h^{-1}$.

Selon un mode de réalisation très préféré, l'étape a) est conduite à une température opératoire comprise entre 200 et 400 °C, sous une pression opératoire comprise entre 0,2 et 5 MPa, avec un rapport du débit d'hydrogène sur le débit de charge hydrocarbonée compris entre 50 et 800 Nl/l et à un débit volumique horaire rapporté au volume de la première masse de captation compris entre 10 et 25 $h^{-1}$.

De préférence, la mise en oeuvre est réalisée par injection de la charge hydrocarbonée à traiter et de l'hydrogène dans un réacteur contenant ladite masse de captation, le réacteur étant à lit fixe, à lit mobile ou à lit bouillonnant, de manière préférée dans un réacteur à lit fixe. La première masse de captation comprend au moins un métal M1 du groupe VIB et au moins deux métaux M2 et M3 du groupe VIII déposés sur un support poreux. Le rapport molaire des métaux (M2+M3)/M1 est compris entre 1 et 6, la teneur en métal M1 du groupe VIB sous forme d'oxyde est comprise entre 3 et 14% poids par rapport au poids total de la première masse de captation, la teneur en métal M2 du groupe VIII sous forme d'oxyde est comprise entre 1 et 20% poids par rapport au poids total de la première masse de captation et la teneur en métal M3 du groupe VIII sous forme d'oxyde est comprise entre 5 et 28% poids par rapport au poids total la première masse de captation.

La masse de captation de l'étape a) selon l'invention présente avantageusement un rapport molaire des métaux M2/M3 compris entre 0,05 et 2, de manière préférée entre 0,08 et 1,5, de manière encore plus préférée entre 0,08 et 1,25.

De manière préférée, le rapport molaire des métaux (M2+M3)/M1 de la première masse de captation est compris entre 1 et 5, de préférence entre 1 et 4,5, de manière plus préférée entre 1,5 et 4.

De préférence la teneur en métal M1 du groupe VIB sous forme d'oxyde est comprise entre 3 et 12% poids par rapport au poids total de la masse de captation, de manière plus préférée entre 4 à 10% poids et de manière encore plus préférée entre 4 et 9 % poids.

De préférence la teneur en métal M2 du groupe VIII sous forme d'oxyde est comprise entre 1 et 15% poids par rapport au poids total de la masse de captation, de manière préférée entre 1 et 10% poids, de manière plus préférée entre 1 et 9% poids et de manière encore plus préférée entre 2 et 5% poids.

De préférence la teneur en métal M3 du groupe VIII sous forme d'oxyde est comprise entre 5 à 18% poids par rapport au poids total de la masse de captation, de manière préférée entre 5 à 15% poids, de manière plus préférée entre 7 à 15% poids, de manière encore plus préférée entre 9 et 15% poids. Le métal M1 est le molybdène, le métal M2 est le cobalt et le métal M3 est le nickel.

La première masse de captation peut comprendre un dopant tel que le phosphore. La teneur en phosphore sous forme d'oxyde est comprise entre 0,2 et 6% poids par rapport au poids total de la première masse de captation, de manière préférée comprise entre 0,3 et 5% poids et de manière plus préférée entre 0,4 et 4% poids.

Les métaux de la première masse de captation sont déposés sur un support minéral amorphe sélectionné dans le groupe constitué par les alumines, la silice, les silices-alumines, le carbure de silicium, les oxydes de titane seuls ou en mélange avec l'alumine ou de la silice alumine, les oxydes de magnésium seuls ou en mélange avec l'alumine ou de la silice alumine. De préférence le support est sélectionné dans le groupe constitué par les alumines, la silice et les silices-alumines. De manière très préférée, le support est essentiellement constitué par au moins une alumine, c'est-à-dire qu'il comprend au moins 51 % poids, de préférence au moins 60% poids, de manière très préféré au moins 80% poids, voire au moins 90% poids d'alumine.

L'alumine peut être de différentes formes cristallines comme par exemple, de l'alumine alpha, de l'alumine beta, de l'alumine gamma, de l'alumine delta, de l'alumine êta, de l'alumine thêta, de la boehmite ou leurs mélanges. La surface spécifique du support est comprise entre 70 et 350 m$^2$/g, de préférence entre 100 et 300 m$^2$/g, de manière très préférée entre 130 et 250 m$^2$/g. La surface spécifique est mesurée par la technique BET (norme ASTM D3663) bien connue de l'homme du métier.

La porosité du support est telle que celui-ci possède un volume poreux compris entre 0,4 et 1,4 cm$^3$/g, de préférence compris entre 0,5 et 1,3 cm$^3$/g. Le volume poreux est mesuré par porosimétrie au mercure selon la norme ASTM D4284-92 avec un angle de mouillage de 140°.

Les métaux sont déposés sur le support selon des techniques bien connues de l'homme du métier, par exemple par imprégnation à partir de solution de précurseurs de métaux, de préférence par imprégnation à partir de solutions aqueuses de précurseurs de métaux. L'imprégnation peut être par exemple réalisée selon le mode connu d'imprégnation à sec dans lequel on introduit la quantité d'éléments désirée sous forme de sels solubles dans le solvant choisi, par exemple de l'eau déminéralisée, de façon à remplir aussi exactement que possible la porosité du support. Le support ainsi rempli par la solution est de préférence séché.

Les métaux peuvent être déposés en co-imprégnation ou par ajout successif. De façon préférée M1 et M2 d'abord puis M3 ou M3 d'abord puis M1+M2. Du phosphore peut être ajouté dans les solutions d'imprégnation. Lorsque le métal du groupe VIII est le cobalt, on utilise avantageusement comme précurseur le nitrate de cobalt, l'hydroxyde de cobalt ou le carbonate de cobalt. Lorsque le métal du groupe VIII est le nickel, on utilise avantageusement comme précurseur le nitrate de nickel, l'hydroxyde de nickel ou le carbonate de nickel. Lorsque ledit métal du groupe VIB est le molybdène, on utilise avantageusement comme précurseur l'heptamolybdate d'ammonium ou l'oxyde de molybdène. Lorsque le phosphore est présent dans la phase active de la première masse de captation, on utilise avantageusement comme précurseur l'acide phosphorique. Tout autre sel connu de l'homme du métier présentant une solubilité suffisante en solution aqueuse et décomposable lors d'une étape de séchage ou tout type de traitement oxydant peut également être utilisé.

Après introduction des métaux des groupes VIII et VIB et éventuellement du phosphore, la masse de captation est préférentiellement soumise à un traitement thermique. Ce traitement a pour but de transformer les précurseurs moléculaires des métaux en phase oxyde. Il s'agit dans ce cas d'un traitement oxydant mais un simple séchage de l'adsorbant catalytique peut également être effectué. De manière préférée, la première masse de captation est soumise à un traitement de calcination, préalablement à sa mise en oeuvre dans le procédé d'hydrodésulfuration selon l'invention. Ledit traitement de calcination est avantageusement mis en oeuvre sous air ou sous oxygène dilué, à une température comprise entre 200°C et 550°C, de préférence entre 300°C et 500°C.

Après calcination, les métaux déposés sur le support se trouvent sous forme d'oxyde. Avantageusement, la masse de captation calcinée est en outre soumise à un traitement de sulfuration avant sa mise en oeuvre dans le procédé selon l'invention. La sulfuration est réalisée en milieu sulfo-réducteur, c'est à dire en présence d'$H_2S$ et d'hydrogène, afin de transformer les oxydes métalliques en sulfures de métaux de transition tels que le $MoS_2$, le $Ni_3S_2$ et le $Co_9S_8$. La sulfuration est réalisée en injectant sur la masse de captation un flux contenant de l'$H_2S$ et de l'hydrogène, ou bien un composé soufré susceptible de se décomposer en $H_2S$ en présence de la masse de captation et de l'hydrogène. Les polysulfures tel que le diméthyldisulfure sont des précurseurs d'$H_2S$ couramment utilisés pour la sulfuration. La température est ajustée afin que l'$H_2S$ réagisse avec les oxydes métalliques pour former des sulfures métalliques. Cette sulfuration peut être réalisée in situ ou ex situ (en dedans ou en dehors du réacteur dans lequel est réalisée la réaction de captation) à des températures comprises entre 200 et 600°C et plus préférentiellement entre 300 et 500°C. De préférence les métaux sont substantiellement sulfurés. Un métal est considéré comme substantiellement sulfuré lorsque le rapport molaire entre le soufre (S) présent sur la masse de captation et ledit métal est au moins égal à 60% du rapport molaire théorique correspondant à la sulfuration totale du métal considéré :

$$(S/métal)_{\text{masse de captation}} \geq 0,6 \text{ x } (S/métal)_{\text{théorique}} \text{ avec :}$$

- $(S/métal)_{\text{masse de captation}}$ rapport molaire entre le soufre (S) et le métal présent sur la masse de captation.
- $(S/métal)_{\text{théorique}}$ rapport molaire entre le soufre et le métal correspondant à la sulfuration totale du métal en sulfure.

Ce rapport molaire théorique varie selon le métal considéré :

- $(S/CO)_{\text{théorique}} = 8/9$
- $(S/Ni)_{\text{théorique}} = 2/3$
- $(S/Mo)t_{\text{héorique}} = 2/1$

La première masse de captation comprenant plusieurs métaux, le rapport molaire entre le S présent sur la masse de captation et l'ensemble des métaux M1, M2 et M3, est au moins égal à 60%, de manière plus préférée d'au moins 80%, du rapport molaire théorique correspondant à la sulfuration totale de chaque métal en sulfure, le calcul étant effectué au prorata des fractions molaires relatives de chaque métal.

Etape b) du procédé selon l'invention

L'étape b) du procédé de désarsénification selon l'invention consiste à mettre en contact la charge d'hydrocarbure, de l'hydrogène avec une seconde masse de captation comprenant un support sur lequel est déposé du nickel et dont la teneur en poids de nickel, exprimée en oxyde NiO, par rapport au poids total de la masse de captation sous forme oxyde avant sulfuration est d'au moins 5% poids, de préférence comprise entre 5 et 50% poids et de manière très préférée comprise entre 10 et 30% poids.

La seconde masse de captation est mise en oeuvre sous forme sulfurée, c'est-à-dire le rapport molaire entre le soufre (S) présent sur la seconde masse de captation et l'élément nickel est au moins égal à 60% du rapport molaire théorique correspondant à la sulfuration totale du nickel:

$$(S/Ni)_{\text{masse de captation}} \geq 0,6 \text{ x } (S/Ni)_{\text{théorique}}$$

avec

- $(S/Ni)_{\text{masse de captation}}$ rapport molaire entre le soufre (S) et l'élément nickel présent sur l'adsorbant catalytique.
- $(S/Ni)_{\text{théorique}}$ rapport molaire entre le soufre et l'élément nickel correspondant à la sulfuration totale du nickel en sulfure, qui est égal à 2/3.

De préférence, le rapport molaire entre le soufre (S) présent sur la seconde masse de captation et l'élément nickel est au moins égal à 80% du rapport molaire théorique correspondant à la sulfuration totale du nickel.

Le support est un support poreux qui peut être choisi parmi le charbon, le charbon actif, le coke, la silice, les alumines, les silices-alumines, les silicates, les aluminates et les silico-aluminates (zéolitiques par exemple). De préférence le support est une alumine $\alpha$ ou $\gamma$ ou un mélange des deux.

Le support présente un volume poreux total, mesurée par porosimétrie au mercure selon la norme ASTM D4284-92 avec un angle de mouillage de 140°, compris généralement entre 0,2 et 1,2 ml/g et de préférence compris entre 0,5 et 1,2 ml/g.

Par ailleurs, le support utilisé a généralement une surface spécifique, déterminée selon la méthode ASTM D3663, comprise entre 10 et 300 m$^2$/g et de préférence comprise entre 50 et 200 m$^2$/g.

Alternativement, la masse de captation peut contenir en outre des éléments dits "promoteurs", qui sont choisis dans le groupe formé par P, Mg, Ca, Sr, Mn, Fe, Co, Cu, Zn et Mo. Les éléments "promoteurs" sont de préférence présents à une teneur comprise entre 0,1 et 2% poids par rapport au poids total de la masse de captation.

La seconde masse de captation peut être préparée par une méthode qui comprend:

i) l'incorporation d'au moins un composé de nickel, à un support tel que défini plus haut ;

ii) le séchage et la calcination éventuelle du produit obtenu à l'étape (i) de manière à transformer au moins en partie le ou les composés de nickel qu'il contient en oxyde de nickel;

iii) la mise en contact du produit obtenu à l'étape (ii), ou à l'étape (i) s'il n'y a pas eu d'étape (ii), avec du soufre ou un composé contenant du soufre afin de sulfurer le nickel déposé sur le support.

L'incorporation du nickel sur le support peut être effectuée par toutes méthodes connues de l'homme du métier, par exemple par imprégnation à l'aide d'une solution aqueuse contenant un sel de nickel soluble dans l'eau comme, par exemple, le nitrate, le formiate, l'acétate, l'acétylacétate de nickel. Le nitrate est généralement préféré en raison de sa très grande solubilité. L'incorporation du sel de nickel peut se faire par exemple par imprégnation à "sec" (remplissage de la porosité du support avec un volume de liquide égal au volume poreux du support) à partir d'une solution de nitrate de nickel.

Le séchage qui permet d'éliminer toute ou une partie de l'eau introduite lors de l'imprégnation, est de préférence conduit à une température comprise entre 50 et 250°C, de manière plus référée comprise entre 70°C et 200°C. Le séchage peut être effectué sous air ou sous atmosphère inerte (azote par exemple).

Le support imprégné de nickel et séché est de préférence ensuite calciné sous flux gazeux, de manière préférée sous air. La température de calcination est généralement comprise entre 150°C et 450°C, de préférence comprise entreenviron 200°C et environ 400°C. La durée de calcination est généralement comprise entre 0,5 heures et 24 heures, de manière préférée de 1 heure à 12 heures. L'étape de calcination peut être opérée par palier de température, jusqu'à la température de consigne maximale définie.

L'étape de sulfuration (iii) est réalisée en milieu sulfo-réducteur afin de transformer l'oxyde de nickel en sulfures de nickel. La sulfuration est réalisée en injectant sur la masse de captation un flux contenant de l'H$_2$S et de l'hydrogène, ou bien un composé soufré (par exemple les polysulfures) susceptible de se décomposer en H$_2$S en présence de la masse de captation et de l'hydrogène. La température de la sulfuration est ajustée afin que l'H$_2$S réagisse avec l'oxyde de nickel pour former des sulfures de nickel. Cette sulfuration peut être réalisé in situ ou ex situ (en dedans ou en dehors du réacteur dans lequel a lieu la seconde étape de captation) à des températures comprises entre 200 et 600°C et plus préférentiellement entre 300 et 500°C.

Conformément à l'invention, la mise en contact à l'étape b) est effectuée dans les conditions suivantes:

- une température comprise entre 30 à 400°C, de préférence comprise entre 200 et 400°C;
- une pression comprise entre 0,2 et 5 MPa ;
- un débit volumique horaire rapporté au volume de la seconde masse de captation compris entre 4 à 50 h$^{-1}$, de préférence compris entre 6 à 40 h$^{-1}$, de manière plus préférée compris entre 10 et 25 h$^{-1}$
- un ratio H$_2$/charge compris entre 2 et 800 Nl/l, de préférence compris entre 50 et 800 Nl/l.

Selon un premier mode de réalisation du procédé selon l'invention, l'étape a) est conduite avant l'étape b) et lesdites étapes sont réalisées soit dans deux réacteurs disposés en série soit dans un seul réacteur comportant au moins deux lits fixes comprenant respectivement les première et seconde masse de captations.

Lorsque les étapes a) et b) sont réalisées dans deux réacteurs distincts, ces réacteurs peuvent être à lit fixe, à lit mobile ou à lit bouillonnant, de manière préférée à lit fixe.

Lorsque les étapes a) et b) sont menées dans un même réacteur comprenant deux lits fixes de masses de captation, le réacteur est conçu de sorte que la charge d'hydrocarbures à purifier rencontre un premier lit fixe contenant la première masse de captation puis un second lit fixe contenant la seconde masse de captation. Il est à noter que les deux lits fixes peuvent être disposés successivement de sorte qu'il existe ou non un espace entre les deux lits fixes.

Alternativement selon un second mode de réalisation, les étapes a) et b) sont effectuées simultanément dans un même réacteur par exemple à lit fixe, à lit mobile ou à lit bouillonnant, qui comprend une zone réactionnelle incluant un mélange des première et seconde masses de captation.

Selon l'invention, le rapport de volume de la première masse de captation par rapport au volume de la deuxième masse de captation est généralement compris entre 0,2 et 5, de préférence entre 0,2 et 2.

Les procédés selon l'invention sont particulièrement adaptés pour prétraiter une charge contenant de l'arsenic avant une étape d'hydrotraitement catalytique, de préférence une étape d'hydrodésulfuration, afin de préserver la durée de vie du catalyseur d'hydrotraitement qui est généralement désactivé par l'arsenic.

Lorsque que les procédés d'élimination de l'arsenic selon l'invention sont employés en tant que prétraitement de la charge d'hydrocarbures, avant une étape d'hydrodésulfuration mettant en oeuvre un lit de catalyseur d'hydrodésulfuration, le rapport de volume des première masse et seconde masse de captation par rapport au volume de catalyseur d'hydrodésulfuration est généralement compris entre 0,04 et 0,5.

Par ailleurs lorsque les étapes de prétraitement et d'hydrodésulfuration utilisent un réacteur du type lit fixe, ces deux étapes peuvent être conduites dans le même réacteur à la conditions que les lits contenant respectivement les première et seconde masses de captation soient disposés de sorte que la charge à traiter rencontre d'abord les lits de masses de captation avant le lit de catalyseur d'hydrodésulfuration.

Alternativement, les première et seconde masses de captation sont en mélange dans un même lit, disposé en amont du lit de catalyseur d'hydrodésulfuration par rapport au sens d'introduction de la charge à traiter.

Les exemples suivants, donnés à titre non limitatif, illustrent l'invention.

## **Exemples**

### Préparation d'une masse de captation A au nickel

La masse de captation A est préparée par une double imprégnation à sec d'une solution aqueuse préparée à partir de nitrate de nickel, le volume de la solution contenant le métal étant égal au volume poreux de la masse de support.

Le support est une alumine de transition présentant une surface spécifique de 135 m$^2$/g et un volume poreux de 1,12 cm$^3$/g. La surface spécifique du support est mesurée par la méthode BET (norme ASTM D3663) et le volume poreux est déterminé par porosimétrie au mercure selon la norme ASTM D4284-92 avec un angle de mouillage de 140°.

Le support imprégné de nickel est ensuite séché pendant 12 heures à 120°C puis calciné sous air à 500°C pendant 2 heures.

La masse de captation A après calcination a une teneur en nickel, exprimée en NiO, de 18% par rapport au poids total de la masse de captation.

### Préparation d'une masse de captation B comprenant du nickel, du cobalt et du molybdène

Comme dans le cas de la masse de captation A, le support utilisé pour la masse de captation B est une alumine de transition présentant une surface spécifique de 135 m$^2$/g et un volume poreux de 1,12 cm$^3$/g. La masse de captation B contient à la fois du nickel, du cobalt et du molybdène et est préparée par imprégnation à sec en deux étapes. La première étape consiste en l'imprégnation à sec d'une solution aqueuse d'heptamolybdate d'ammonium et de nitrate de cobalt, le volume de la solution contenant les métaux étant rigoureusement égal au volume poreux de la masse de support. Les concentrations en précurseurs de la solution aqueuse sont ajustées de manière à déposer sur le support les teneurs pondérales souhaitées. Le solide imprégné de molybdène et de cobalt est ensuite séché pendant 12 heures à 120°C puis calciné sous air à 500°C pendant 2 heures. La deuxième étape permet l'imprégnation à sec d'une solution aqueuse de nitrate de nickel, le volume de la solution contenant le métal étant rigoureusement égal au volume poreux de la masse de support. La concentration en précurseur de la solution aqueuse est ajustée de manière à déposer sur le support les teneurs pondérales souhaitées. Le solide est ensuite séché pendant 12 heures à 120°C puis calciné sous air à 500°C pendant 2 heures.

A l'issue de la calcination, on obtient une masse de captation B ayant des teneurs, exprimées en % poids par rapport au poids total de la masse de captation, de 3% poids de CoO, 10% poids de NiO et 15% poids de MoO$_3$.

### Évaluation des performances du procédé de captation de l'arsenic selon l'invention

On procède ensuite à l'évaluation des performances du procédé de captation de l'arsenic selon l'invention sur une coupe essence issue d'un procédé de craquage catalytique ayant une température d'ébullition comprise entre 50 et 245°C, contenant 360 ppm poids de soufre et dopée par un composé arsénié (triphényl arsine) de façon à atteindre une concentration de 3000 ppb poids d'arsenic.

Dans l'exemple 1 (comparatif), l'essence est traitée dans une unité pilote équipée d'un réacteur tubulaire comprenant deux lits fixes de 10 ml de masses de captation A, à une température de 250°C, à une pression totale de 2 MPa avec une Vitesse Volumique Horaire (VVH) totale de 10 h$^{-1}$ (soit une VVH de 20 h$^{-1}$ pour chacun des lits de catalyseurs) et un rapport H$_2$/charge égal à 300 Nl/l.

Avant de conduire la réaction, la masse de captation A est sulfurée à 350°C sous un mélange gazeux (H$_2$/H$_2$S) à (85/15) % vol./vol.

Dans l'exemple 2 (selon l'invention), l'essence est traitée dans les mêmes conditions opératoires que l'exemple 1 à l'exception du fait que le réacteur tubulaire est équipé de deux lits fixes de 10 ml de masses de captation A et B.

Les lits sont disposés dans le réacteur de sorte que l'essence est mise en contact d'abord avec la masse de captation B (1$^{er}$ lit) et ensuite avec la masse de captation A (2$^{ème}$ lit). Avant de conduire la réaction, les masses de captation A et B sont également sulfurées à 350°C sous un mélange gazeux ($H_2$/$H_2S$) à (85/15) % vol./vol.

Le tableau 1 résume les conditions opératoires des exemples 1 et 2.

**Tableau 1**

| | Exemple 1 (comparatif) | Exemple 2 (selon l'invention) |
|---|---|---|
| 1$^{er}$ lit fixe | Masse de captation A (18% pds NiO / pds total de la masse de captation) | Masse de captation B (3% poids de CoO, 10% poids de NiO et 15% poids de MoO3 / pds total de la masse de captation) |
| 2$^{ème}$ lit fixe | Masse de captation A (18% pds NiO / pds total de la masse de captation) | Masse de captation A (18% pds NiO / pds total de la masse de captation) |
| Température | 250°C | 250°C |
| Pression totale | 2 MPa | 2 MPa |
| VVH totale | 10 h$^{-1}$ | 10 h$^{-1}$ |
| Rapport H2/charge | 300 Nl/l | 300 Nl/l |

La quantité d'arsenic dans la charge et dans les effluents soutirés du réacteur est mesurée par absorption atomique. Ces valeurs permettent ainsi de calculer les rendements en captation d'arsenic (HDAs).

Le tableau 2 ci-dessous indique le temps de perçage qui correspond au temps au bout duquel la teneur en arsenic dans l'effluent est supérieure ou égale à 1% de la teneur en arsenic dans la charge ($C/C_0 \geq 1$ %m/m).

**Tableau 2**

| | Exemple 1 (comparatif) | Exemple 2 (selon l'invention) |
|---|---|---|
| Temps de perçage (h) | 52 | 490 |

Les résultats montrent que le procédé selon l'invention, mettant en oeuvre l'enchainement spécifique de masses de captation, permet de capter plus d'arsenic que le procédé non conforme à l'invention ; cela se traduit par un temps de perçage multiplié par environ 9,4.

**Revendications**

**1.** Procédé d'élimination d'arsenic d'une charge d'hydrocarbures au moins en partie liquide à température ambiante et pression atmosphérique, comprenant au moins les étapes suivantes:

a) on met en contact la charge d'hydrocarbures, de l'hydrogène et une première masse de captation comprenant un support et au moins un métal M1 du groupe VIB et au moins deux métaux M2 et M3 du groupe VIII, le rapport molaire des métaux (M2+M3)/M1 étant compris entre 1 et 6, la teneur en métal M1 du groupe VIB sous forme d'oxyde étant comprise entre 3 et 14% poids par rapport au poids total de la première masse de captation, la teneur en métal M2 du groupe VIII sous forme d'oxyde étant comprise entre 1 et 20% poids par rapport au poids total de la première masse de captation et la teneur en métal M3 du groupe VIII sous forme d'oxyde étant comprise entre 5 et 28% poids par rapport au poids total de la première masse de captation, dans lequel le métal M1 est le molybdène, le métal M2 est le cobalt et le métal M3 est le nickel, la mise en contact de l'étape a) étant réalisée à une température comprise entre 30 et 400°C, à une pression comprise entre 0,2 et 5 MPa, avec un débit volumique horaire rapporté au volume de la première masse de captation compris entre 4 et 50 h$^{-1}$ et avec un débit d'hydrogène compris entre 2 et 800 litres par litre de charge;

b) on met en contact la charge d'hydrocarbures, de l'hydrogène et une seconde masse de captation sous forme sulfure comprenant un support et du nickel, la teneur en nickel étant d'au moins 5% poids de NiO par rapport au poids total de la seconde masse de captation sous forme oxyde avant sulfuration, la mise en contact de l'étape b) étant réalisée à une température comprise entre 30 et 400°C, à une pression comprise entre 0,2 et 5 MPa, avec un débit volumique horaire rapporté au volume de la seconde masse de captation compris entre 4 et 50 $h^{-1}$ et avec un débit d'hydrogène compris entre 2 et 800 litres par litre, et dans lequel l'étape a) est soit réalisée avant l'étape b), soit réalisée simultanément avec l'étape b).

2. Procédé selon la revendication 1, dans lequel l'étape a) est réalisée avant l'étape b), lesdites étapes sont conduites dans une première et une seconde zones réactionnelles respectivement comprises dans un premier et second réacteurs.

3. Procédé selon la revendication 1, dans lequel l'étape a) est réalisée avant l'étape b), lesdites étapes sont conduites respectivement dans une première et une seconde zones réactionnelles comprises dans un même réacteur en lit fixe.

4. Procédé selon la revendication 1, dans lequel l'étape a) est réalisée simultanément avec l'étape b), lesdites étapes sont conduites dans un réacteur incluant une zone réactionnelle comprenant un mélange des première et seconde masses de captation.

5. Procédé selon l'une des revendications précédentes dans lequel la teneur en métal M1 est comprise entre 3 et 12% poids, la teneur en métal M2 est comprise entre 1 et 15% poids, et la teneur en métal M3 est comprise entre 5 et 18% poids par rapport au poids total de la première masse de captation.

6. Procédé selon l'une des revendications précédentes dans lequel la première masse de captation présente un rapport molaire des métaux M2/M3 compris entre 0,05 et 2.

7. Procédé selon l'une des revendications précédentes dans lequel la seconde masse de captation a une teneur en nickel comprise entre 5 et 50% poids de NiO par rapport au poids total de la seconde masse de captation sous forme oxyde avant sulfuration.

8. Procédé selon l'une des revendications précédentes dans lequel les métaux M1, M2 et M3 de la première masse de captation sont sulfurés.

9. Procédé selon la revendication 8, dans lequel le rapport molaire entre le soufre (S) présent sur la première masse de captation et l'ensemble des métaux M1, M2 et M3, est au moins égal à 60% du rapport molaire théorique correspondant à la sulfuration totale de chaque élément en sulfure, au prorata des fractions molaires relatives de chaque métal.

10. Procédé selon l'une des revendications précédentes dans lequel le rapport molaire entre le soufre (S) présent sur la seconde masse de captation et le nickel est au moins égal à 60% du rapport molaire théorique correspondant à la sulfuration totale du nickel.

11. Procédé selon l'une des revendications précédentes dans lequel le rapport de volume de la première masse de captation par rapport au volume de la deuxième masse de captation est compris entre 0,2 et 5, de préférence compris entre 0,2 et 2.

12. Procédé selon l'une des revendications précédentes et dans lequel l'effluent à teneur réduite en arsenic issu des étapes a) et b) est traité dans une étape d'hydrotraitement catalytique.

**Patentansprüche**

1. Verfahren zur Entfernung von Arsen aus einer mindestens teilweise bei Umgebungstemperatur und Atmosphärendruck flüssigen Kohlenwasserstoffcharge, umfassend mindestens die folgenden Schritte:

a) die Kohlenwasserstoffcharge, der Wasserstoff und eine erste Einfangmasse werden in Kontakt gebracht, umfassend mindestens ein Metall M1 der Gruppe VIB und mindestens zwei Metalle M2 und M3 der Gruppe VIII, wobei das Molverhältnis der Metalle (M2+M3)/M1 zwischen 1 und 6 liegt, der Gehalt an Metall M1 der Gruppe VIB in der Form von Oxid zwischen 3 und 14 Gew.-% im Verhältnis zur Gesamtmasse der ersten Einfangmasse liegt, der Gehalt an Metall M2 der Gruppe VIII in der Form von Oxid zwischen 1 und 20 Gew.-% im Verhältnis zur Gesamtmasse der ersten Einfangmasse liegt, und der Gehalt an Metall M3 der Gruppe VIII in der Form von Oxid zwischen 5 und 28 Gew.-% im Verhältnis zur Gesamtmasse der ersten Einfangmasse liegt, wobei das Metall M1 Molybdän ist, das Metall M2 Kobalt ist, und das Metall M3 Nickel ist, wobei das Inkontaktbringen von Schritt a) bei einer Temperatur zwischen 30 und 400°C, bei einem Druck zwischen 0,2 und 5 MPa, mit einem Volumendurchsatz pro Stunde, bezogen auf das Volumen der ersten Einfangmasse, zwischen 4 und 50 h$^{-1}$ und mit einem Wasserstoffdurchsatz zwischen 2 und 800 Liter pro Liter Charge durchgeführt wird;

b) die Kohlenwasserstoffcharge, der Wasserstoff und eine zweite Einfangmasse in der Form von Sulfid werden in Kontakt gebracht, umfassend einen Träger und Nickel, wobei der Gehalt an Nickel mindestens 5 Gew.-% NiO im Verhältnis zum Gesamtgewicht der zweiten Einfangmasse in der Form von Oxid vor der Sulfurierung beträgt,

wobei das Inkontaktbringen von Schritt b) bei einer Temperatur zwischen 30 und 400°C, bei einem Druck zwischen 0,2 und 5 MPa, mit einem Volumendurchsatz pro Stunde, bezogen auf das Volumen der zweiten Einfangmasse, zwischen 4 und 50 h$^{-1}$ und mit einem Wasserstoffdurchsatz zwischen 2 und 800 Liter pro Liter durchgeführt wird,

und wobei der Schritt a) entweder vor dem Schritt b) durchgeführt wird, oder gleichzeitig mit dem Schritt b) durchgeführt wird.

2. Verfahren nach Anspruch 1, wobei der Schritt a) vor dem Schritt b) durchgeführt wird, wobei die Schritte in einer ersten und einer zweiten Reaktionszone vorgenommen werden, die jeweils zwischen einem ersten und zweiten Reaktor liegen.

3. Verfahren nach Anspruch 1, wobei der Schritt a) vor dem Schritt b) durchgeführt wird, wobei die Schritte jeweils in einer ersten und einer zweiten Reaktionszone vorgenommen werden, die jeweils in demselben Festbettreaktor liegen.

4. Verfahren nach Anspruch 1, wobei der Schritt a) gleichzeitig mit dem Schritt b) durchgeführt wird, wobei die Schritte in einem Reaktor vorgenommen werden, der eine Reaktionszone aufweist, die eine Mischung der ersten und zweiten Einfangmasse umfasst.

5. Verfahren nach einem der vorhergehenden Ansprüche, wobei der Gehalt an Metall M1 zwischen 3 und 12 Gew.-% liegt, der Gehalt an Metall M2 zwischen 1 und 15 Gew.-% liegt, und der Gehalt an Metall M3 zwischen 5 und 18 Gew.-% im Verhältnis zum Gesamtgewicht der ersten Einfangmasse liegt.

6. Verfahren nach einem der vorhergehenden Ansprüche, wobei die erste Einfangmasse ein Molverhältnis der Metalle M2/M3 zwischen 0,05 und 2 aufweist.

7. Verfahren nach einem der vorhergehenden Ansprüche, wobei die zweite Einfangmasse einen Gehalt an Nickel zwischen 5 und 50 Gew.-% NiO im Verhältnis zum Gesamtgewicht der zweiten Einfangmasse in der Form von Oxid vor der Sulfurierung aufweist.

8. Verfahren nach einem der vorhergehenden Ansprüche, wobei die Metalle M1, M2 und M3 der ersten Einfangmasse sulfuriert werden.

9. Verfahren nach Anspruch 8, wobei das Molverhältnis zwischen dem Schwefel (S), der in der ersten Einfangmasse vorliegt, und der Gesamtheit der Metalle M1, M2 und M3 mindestens gleich 60 % des theoretischen Molverhältnisses, entsprechend der gesamten Sulfurierung jedes Elements mit Schwefel, im Verhältnis zu den relativen Molfraktionen jedes Metalls ist.

10. Verfahren nach einem der vorhergehenden Ansprüche, wobei das Molverhältnis zwischen dem Schwefel (S), der in der zweiten Einfangmasse vorliegt, und dem Nickel mindestens gleich 60 % des theoretischen Molverhältnisses, entsprechend der gesamten Sulfurierung des Nickels, ist.

11. Verfahren nach einem der vorhergehenden Ansprüche, wobei das Volumenverhältnis der ersten Einfangmasse im Verhältnis zum Volumen der zweiten Einfangmasse zwischen 0,2 und 5, vorzugsweise zwischen 0,2 und 2, liegt.

12. Verfahren nach einem der vorhergehenden Ansprüche, wobei der Abfluss mit reduziertem Gehalt an Arsen, der aus den Schritten a) und b) stammt, in einem katalytischen Hydrobehandlungsschritt behandelt wird.

**Claims**

1. A process for the elimination of arsenic from a hydrocarbon feed which is at least partially liquid at ambient temperature and at atmospheric pressure, comprising at least the following steps:

   a) bringing the hydrocarbon feed and hydrogen into contact with a first capture mass comprising a support and at least one metal M1 from group VIB and at least two metals M2 and M3 from group VIII, the molar ratio of the metals (M2+M3)/M1 being in the range 1 to 6, the quantity of metal M1 from group VIB in the oxide form being in the range 3% to 14% by weight with respect to the total weight of the first capture mass, the quantity of metal M2 from group VIII in the oxide form being in the range 1% to 20% by weight with respect to the total weight of the first capture mass and the quantity of metal M3 from group VIII in the oxide form being in the range 5% to 28% by weight with respect to the total weight of the first capture mass, in which the metal M1 is molybdenum, the metal M2 is cobalt and the metal M3 is nickel the contact of step a) being carried out at a temperature in the range 30°C to 400°C, at a pressure in the range 0.2 to 5 MPa, with an hourly space velocity with respect to the volume of the first capture mass in the range 4 to 50 $h^{-1}$ and with a hydrogen flow rate in the range 2 to 800 litres per litre of feed;
   b) bringing the hydrocarbon feed and hydrogen into contact with a second capture mass in the sulphide form comprising a support and nickel, the quantity of nickel being at least 5% by weight of NiO with respect to the total weight of the second capture mass in the oxide form before sulphurization;
   the contact of step b) being carried out at a temperature in the range 30°C to 400°C, at a pressure in the range 0.2 to 5 MPa, with an hourly space velocity with respect to the volume of the second capture mass in the range 4 to 50 $h^{-1}$ and with a hydrogen flow rate in the range 2 to 800 litres per litre;
   and in which step a) is either carried out before step b) or carried out simultaneously with step b).

2. The process according to claim 1, in which step a) is carried out before step b), said steps being carried out in a first and a second reaction zone respectively included in a first and second reactor.

3. The process according to claim 1, in which step a) is carried out before step b), said steps being respectively carried out in a first and a second reaction zone included in the same fixed bed reactor.

4. The process according to claim 1, in which step a) is carried out simultaneously with step b), said steps being carried out in a reactor including a reaction zone comprising a mixture of the first and second capture masses.

5. The process according to one of the preceding claims, in which the quantity of metal M1 is in the range 3% to 12% by weight, the quantity of metal M2 is in the range 1% to 15% by weight and the quantity of metal M3 is in the range 5% to 18% by weight with respect to the total weight of the first capture mass.

6. The process according to one of the preceding claims, in which the first capture mass has a molar ratio of metals M2/M3 in the range 0.05 to 2.

7. The process according to one of the preceding claims, in which the second capture mass has a nickel content in the range 5% to 50% by weight of NiO with respect to the total weight of the second capture mass in the oxide form before sulphurization.

8. The process according to one of the preceding claims, in which the metals M1, M2 and M3 of the first capture mass are sulphurized.

9. The process according to claim 8, in which the molar ratio between the sulphur (S) present on the first capture mass and the total of the metals M1, M2 and M3 is at least 60% of the theoretical molar ratio corresponding to total sulphurization of each element to the sulphide, pro rata to the relative molar fractions of each metal.

10. The process according to one of the preceding claims, in which the molar ratio between the sulphur (S) present on the second capture mass and the nickel is at least 60% of the theoretical molar ratio corresponding to total sulphurization of the nickel.

11. The process according to one of the preceding claims, in which the ratio of the volume of the first capture mass to the volume of the second capture mass is in the range 0.2 to 5, preferably in the range 0.2 to 2.

12. The process according to one of the preceding claims, in which the effluent with a reduced arsenic content obtained from steps a) and b) is treated in a catalytic hydrotreatment step.

**EP 2 816 093 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4046674 A
- FR 2617497
- FR 2673191